# EUROPEAN PATENT SPECIFICATION

(11) **EP 3 349 576 B1**
(45) Date of publication and mention of the grant of the patent: **05.05.2021**
(21) Application number: 16784971.0
(22) Date of filing: 14.09.2016
(51) Int. Cl.: A01K 73/045

(54) **HOLLOW TRAWL DOOR AND WEIGHTS THEREFOR**
HOHLES SCHERBRETT UND GEWICHTE DAFÜR
PORTE DE CHALUT CREUSE ET POIDS ASSOCIÉS

(30) Priority: 14.09.2015 IS 50118
(43) Date of publication of application: 25.07.2018
(73) Proprietor: Ny toghlerahonnun ehf., 110 Reykjavik (IS)
(72) Inventor: JOSAFATSSON, Smari, 203 Kopavogur (IS)
(74) Representative: Arnason Faktor
(86) International application number: PCT/IS2016/050015
(87) International publication number: WO 2017/046819

(56) References cited:
- CN-A- 103 340 186
- FR-A1- 2 735 442
- GB-A- 2 147 182
- US-A- 3 281 980
- US-A1- 2008 307 691
- US-A1- 2015 138 921

## Description

### Field

The present invention relates to trawl doors used in trawl fishing, including shallow water trawl fishing applications, deep water trawl fishing applications, bottom trawl fishing applications as well as at pelagic trawl fishing applications. The invention also relates to seismic surveillance line spreading and spreading of other items towed in water.

### Introduction

The use of trawl doors in the fishing industry are well known and the purpose is to pull and spread a fishing net while being towed by a fishing vessel. A trawl is then attached to a pair of two trawl doors which being connected to a tow cable from the vessel. During towing, the trawl doors keep the mouth of the net spread open. In order to sink the trawl door, weights are placed under the trawl doors or on the outside of the trawl doors in the lower part of the door. Although the weights work as weights to sink the doors they do harm to the fishing ability of the doors as they are taking space from the surface of the doors which is meant to increase the fishing ability of the doors.

The act of attaching and removing weights at sea is very dangerous and requires either taking the trawl door on-board the ship. This is the cause of many accidents as the doors are heavy and difficult to manoeuvre at sea.

US 3,281,980 discloses a hollow trawl door with a concave anterior surface having drain holes for inlet and outlet of water into the hollow trawl door. In order to make the door more heavy, the door is ballasted at the edges with weight blocks.

CN 103 340 186 A discloses a trawl door having a hollow cross-section, one or more chambers, a first side panel, a second side panel, an upper panel, a bottom panel, wherein the first side panel and second side panel are connected at a leading edge and at a trailing edge of the trawl door, and wherein the trawl door has one or more openings at or near the top and the bottom of the trawl door to allow water to flow in and out of the chamber.

### Summary

It is an object of the present invention to overcome and/or ameliorate the aforementioned drawbacks of the prior art and to provide an improved and/or alternative and/or additional device for adjusting the weight of trawl doors where the trawl doors are hanging in the trawl block at the stern, up in the high seat on large multipurpose fishing vessels or in the gallows on the side on a trawler or trawling boat depending on fishing method. This makes it easy to add or remove weights from trawl doors without taking the trawl doors on-board the vessel. It is one preferred object of the present invention to provide a trawl door having at least a hollow cross-section comprising side panels having a curvature forming the upper and lower surface and being connected at a leading edge and at a trailing edge of the trawl door and where an upper panel and a bottom panel form the top and the bottom sides to form a hollow trawl door. Moreover, it is a preferred object of the present invention to provide trawl door with one or more openings in the panels to allow water to fill the chamber between the panels of the trawl door. It is one preferred object of the present invention to provide a trawl door having one or more opening in the panels of the trawl door to allow water to flow in and out of the trawl door. Another preferred object of the present invention is to provide a trawl door having one or more vertical shafts in the chamber of the door accessible from the one or more openings of the trawl door to lower down the weights. The weights may be lowered into the trawl door by chains or wires and separations at the bottom of each compartment of the door can be used to keep the weights separate in order to prevent the weights to get tangled in the chains or wires.

The object(s) underlying the present invention is (are) solved by the features defined in the independent claim 1. The dependent claims relate to preferred embodiments of the present invention. Further additional and/or alternative aspects are discussed below.

Thus, at least one of the preferred objects of the present invention is solved by a trawl door having a hollow cross-section, where the trawl door comprises a first side panel having a curvature forming the upper surface and a second side panel having a curvature forming the lower surface. The first side panel and second side panel are connected at a leading edge and at a trailing edge of the trawl door and furthermore, an upper panel forming the top of the trawl door and a bottom panel forming the bottom of the trawl door. The trawl door has one or more inlets in one or more of the panels to allow water/sea water/ ocean to flow in and out of the chamber between the panels of the trawl door. Furthermore, the trawl door has one or more openings in one or more of the panels of the trawl door to insert weights into the chamber between the panels of the trawl door.

The present invention provides a trawl door having a hollow cross-section. In contrast to conventional trawl doors which do not have chambers inside, the present trawl doors is hollow such as having a hollow cross section of an airfoil shape. Preferably, the radius of the first side panel is greater than that of the second side panel. In operation, such shape allows the water to push the door to spread out constantly and slowly.

The trawl door comprises a first side panel having a curvature forming the upper surface, a second side panel having a curvature forming the lower surface, where the first side panel and second side panel are connected at a leading edge and at a trailing edge of the airfoil, and an upper panel forming the top of the trawl door and a bottom panel forming the bottom of the trawl door.

The trawl door is non-watertight and has one or more openings or openings at or near the top and the bottom of the trawl door to allow water to flow in and out of the chamber of the trawl door. The openings are positioned near the top and the bottom of the trawl door in order to fill and empty the door during shooting and bringing it back in. The fact that chamber is filled with water prevents the door to collapse under pressure in deeper water and stabilizes the door during fishing. This also stabilizes the door in operation. In one preferred embodiment the trawl door comprises a pipe at a leading edge of the door. In such embodiments the first and second side panels are joined with a thick steel pipe at the leading edge. Having a pipe at the front of the door advantageously provides strength for the trawl door, since it is the leading edge that hits the vessel when the trawl doors come up after each fishing haul. Each section also comprises steel tubes which adds to the strength and makes the assembly easier and simpler.

In one preferred embodiment the trawl door has an airfoil cross-section shape which provides improved stability and efficiency. The inventors are able to demonstrate smaller angles of attack using the trawl door of the present invention, which is as little as 7.5 degrees. This is partly due to the design of the trawl door having an airfoil cross section shape and additionally the front-straps. In contrast, traditional designs are always operated fully stalled which results in very high unnecessary drag. Traditional doors nowadays do not operate with such a small angle of attack due to the shape of the doors. They are primarily forcing doors, and consume a large amount of oil during towing. Traditional trawl doors have a forced angle of fishing with much effort angle (about 20 - 40 degrees) with connections of the towing wire in the bracket and with connections from back-straps to the trawl. On the other hand, due to the new form, the inventors only observed very small vortices are formed behind the door, which provides higher stability and decrease the energy consumption required to maintain the positions of the doors.

In a preferred embodiment, the second side panel of the hollow door has one or more front-strap ears, preferably near the trailing edge. The trawl nets are connected to the back-strap ears which are located at the lower surface of the airfoil, which is the inside of the door at the aft end instead of to back-straps in the traditional doors. When connected to the front-straps, the new doors automatically spreads outwards constantly and slowly reaching a smaller angle of attack.

All embodiments listed below relate to the trawl door of the present invention.

In one preferred embodiment the one or more openings in one or more of the panels of the trawl door is at or near the middle of the trawl door or near its top.

In one preferred embodiment the one or more opening has a lid.

In one preferred embodiment the trawl door has one or more vertical shafts or pipes in the chamber of the door extending from the one or more openings towards the bottom of the trawl door or to the bottom of one of the chambers within the door to lower down the weights.

In one preferred embodiment the weights are attached to one or more of a wire, a string or a chain to lower the weights down and to lift them up.

In one preferred embodiment the upper end of the wire, the string or the chain has fastening means to attach the upper end to the inside of the chamber, the inside of the lit, or close to the lid.

In one preferred embodiment the trawl door has a V-shape, U-shaped, dihedral, tip dihedral or polyhedral shape.

In one preferred embodiment the trawl door further comprises a keel, said keel comprising plates or bands in the same shape as the cross-section of the hollow trawl door.

In one preferred embodiment the trawl door further comprises a trawl door shoe, said trawl door shoe comprising plates or bands in the same shape as the cross-section of the hollow trawl door.

In one preferred embodiment the front surface further comprises one or more front-strap ears near the trailing edge.

In one preferred embodiment the back surface further comprises one or more back-strap ears near the trailing edge.

In one preferred embodiment the trawl door further comprises one or more spoilers.

In one preferred embodiment the trawl door further comprises a location sensor.

In one preferred embodiment the trawl door further comprises a bracket at the front side panel and optionally a bracket stopper.

In one preferred embodiment the trawl door further comprises an airfoil cross-section having a reinforcing pipe along the leading edge of the airfoil, a reinforcing bar along the trailing edge of the airfoil, and profiles extending through each of the one or more chambers from the upper panel to the lower panel to increase the strength of the hollow trawl door.

In one preferred embodiment the trawl door further comprising bands, having the same shape as the upper and lower panel, for reinforcing the hollow trawl door and to divide the hollow trawl door into more than one chambers.

In one preferred embodiment the radius of the second side panel which is about at least about 1 to about 5, preferably about 2 to about 3, times of the radius of the first side panel.

In one preferred embodiment the leading edge has trawl door further comprises a front member extending along the leading edge.

In one preferred embodiment the trawl door further comprises a flap member on the front side panel at the trailing edge of the airfoil.

In preferred embodiments the hollow trawl door has a keel and/or trawl door shoe having the same shape as the fishing form of the trawl door, wherein the plates forming the keel and/or trawl door shoe have the same shape as the plates forming the upper and lower panel. This gives the trawl door a uniform shape, such that both the keel and the shoe are formed in the fishing form or fishing capacity of the trawl door.

In the present context the term "water" relates to clear water or sea water (the ocean) as most trawling takes place in the ocean/sea.

In the present context the terms "fishing form", "fishing capacity" or "fishing efficiency" of the trawl door relates to the function of the trawl door as a result of its shape.

In the present context the terms "upper panel", "lower panel", "band" and "keel plate" refer to a plate having the same shape as the cross-sectional airfoil shape of the trawl door and having the purpose of being building components for the door by being the top or bottom panel of the door or bands dividing the door into more than one chamber or forming the keel or trawl door shoe for the new trawl door design.

### Brief Description of the Figures

Fig. 1 shows an embodiment of the hollow trawl door of the invention.
Fig. 2 shows placement of weights inside a hollow square shaft inside a trawl door.
Fig. 3 shows attachment of weights at the inside bottom of the trawl door.
Fig. 4 shows a trawl door with lids for openings, a keel and trawl door shoe.
Fig. 5 shows a trawl door with front-straps and back-straps.
Fig. 6 shows the inside of the hollow trawl door design with airfoil cross-section.
Fig. 7 shows front members at the leading edge of the preferred trawl door.
Fig. 8 shows a flap member located at the trailing edge of trawl door.

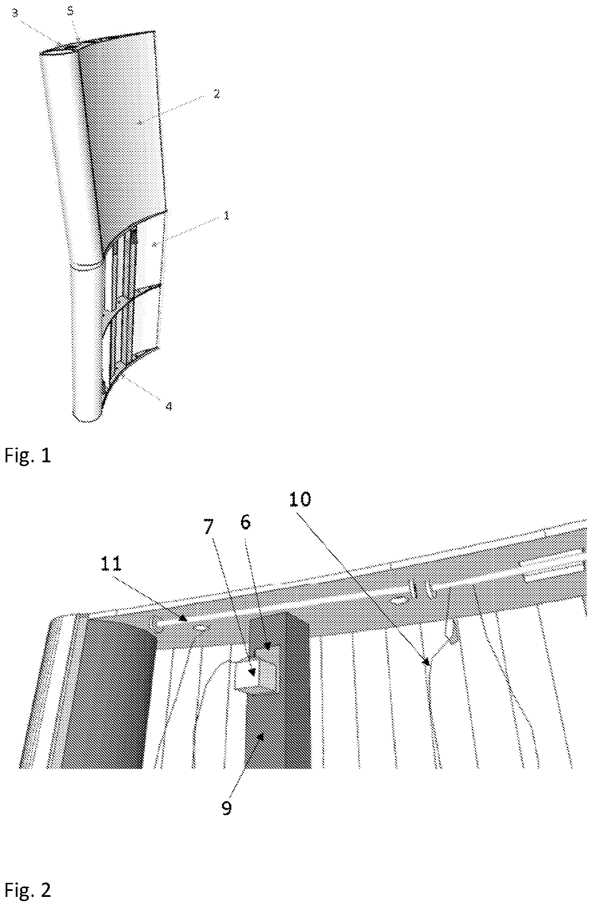

Figure 1 is a schematic drawing of the trawl door of the present invention having a V-shape. The upper part shows the front side as closed, but in the lower part the panel has been removed to show inside the trawl door. The inside of the first panel 1 forming the back surface of the trawl door is shown in the lower part of the drawing as well as the second panel 2 forming the front surface of the trawl door. The upper panel 1 forming the top of the trawl door and a bottom panel 4 forming the bottom of the trawl door are also shown in the drawing. Opening 5 for allowing water to enter and leave the hollow trawl door are shown in the upper 3 and lower panel.

Figure 2 shows a part or a chamber of a hollow trawl door according to one embodiment of the present invention where the second side panel has been removed. The trawl door further comprises openings at or near the top of the chamber, i.e. in the upper panel 1 or at the top of the second side panel to insert weights 7 into the chamber between the panels of the trawl door. The weights 7 are inserted through the opening (not shown) and lowered down to the bottom of the door as is shown in the drawing where the weights 7 rest on the bottom panel or the band separating the chambers. In this embodiment the weights 7 are attached to a wire 10 to lower the weights down and to lift them up. The weights 7 can also lowered down shafts 9 to the bottom of a compartment or the bottom of the door.

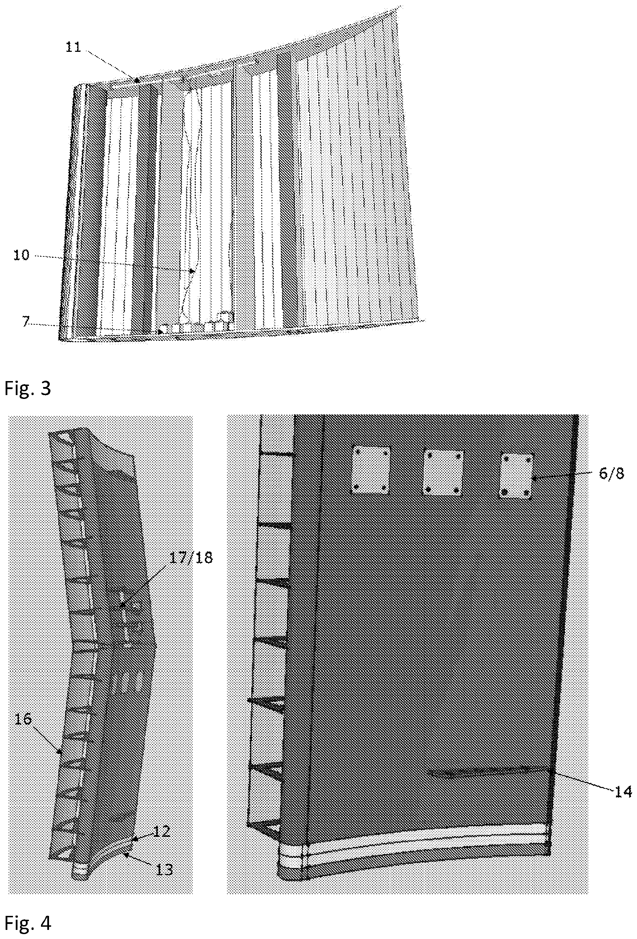

Figure 3 shows a similar embodiment as is shown in Fig.1 where the view is under the upper panel. The weights are inserted through openings 6 in the upper panel 3 or at the top of the second side panel. The drawing shows both where the weights are inserted through an opening and lowered down to the bottom of the door and where the weights are inserted through the opening into vertical shafts 9 in the chamber of the door. The wires have hooks which can be attached to an attachment means 11 on the inside of the door. In this embodiment the attachment means is on the inner side of the upper panel 3, in the lower section of the trawl door just below the middle of the trawl door.

Figure 4 shows an embodiment of a hollow trawl door according the present invention having an airfoil shaped cross section. The drawing shows a keel 12 and trawl door shoe 13 at the bottom of the door, a spoiler 16, bracket 17 and a bracket stopper 18 as well as front strap ears. The opening 6 in the lower part of the door is closed by a lid 8.

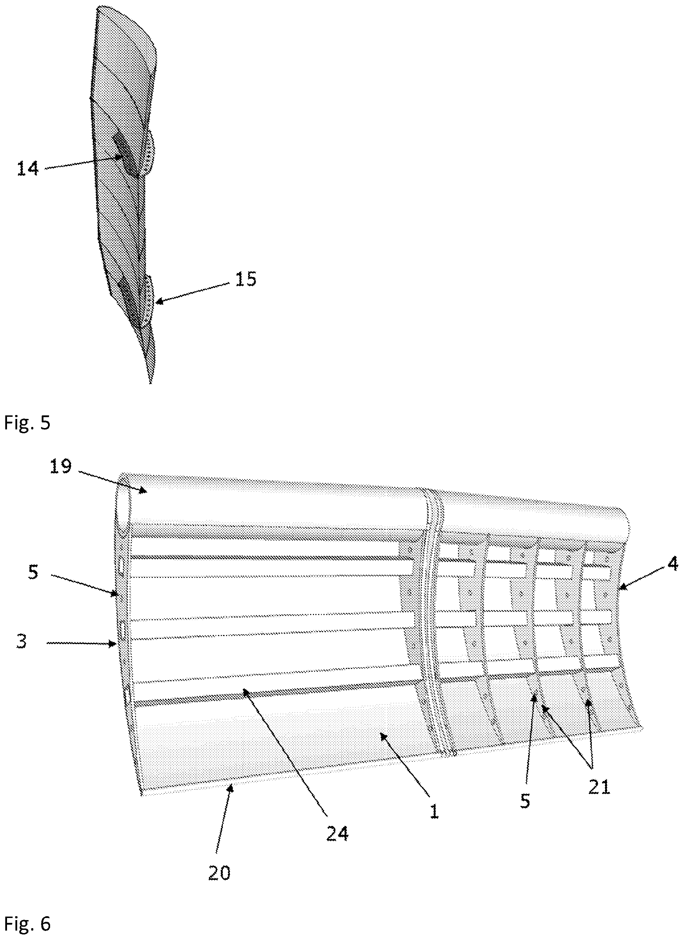

Figure 5 is a perspective drawing of a tip dihedral trawl door according to the present invention having front strap ears 14 and back strap ears 15.

Figure 6 shows a perspective drawing of a trawl door according to the present invention where the second panel (lower side) is removed to show inside the trawl door. The figure shows the pipe 19 at the leading edge of the trawl door and a reinforcement pipe 20 at the trailing edge of the door. The back surface or first panel 1 is shown. The upper 3 and lower 4 panels or the bands 21 are shown with openings 5 for water to penetrate. The profiles or longitudinal strengthening members 24 make the assembly if the plate more easy and correct. The upper side of the trawl door is shown as one compartment with three profiles extending between the upper panel and the upper band of the two bands separating the upper and the lower part of the V-shaped trawl door. The lower side of the trawl door is shown as four compartments separated by three bands between the lower panel and the lower band of the two bands separating the upper and the lower part of the V-shaped trawl door.

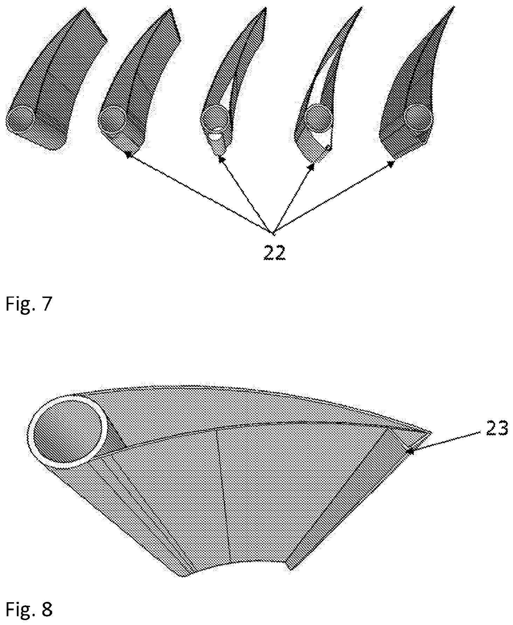

Figure 7 shows different embodiments of front members which can be added on the leading edge of the door. The trawl door may have a front member extending along the leading edge of the door to cut the water during towing at higher speed. The trawl door according to the present inventions preferably further comprises a flap member 23 on the front side panel at the trailing edge of the airfoil. Such as shown in figure 8. This flap 23 may further strengthen the door as well as raise the maximum lift coefficient. When the water flows along the front side of the door, the flap 23 pushes the current outwards. In addition, this causes a change in the water stream flowing along the inside of the door to suddenly flow directly away from the door, thereby increasing the flow rate. Surprisingly, this leads to the forming of vortices further away from the trawl door, thus reducing the negative impact on the effectiveness of the trawl door as a result.

It is not necessary to force the spread for the trawl doors of the present invention.

Fishing with conventional trawl doors requires a 20 to 40 degrees angle of attack with connections to the brackets and to the back-strap ears. Conventional trawl door operate with a 37 degrees angle of attack. This big angle of attack takes on a lot of sea water and increases oil consumption. In contrast, the trawl door of the present invention surprisingly works at as low as 7.5 degrees of angle of attack. Therefore, the new design allows trawling at much lower angle of attack which further reduces oil consumption.

As the new form allows a less forced spreading of the trawl doors, there is less resistance due to vortices and hence less energy consumption in stabilizing the trawl doors.

This novel form of trawl doors works equally well on the bottom of the ocean, just off the bottom in mid water or high up in the water. This has the advantage that bottom fishing does not require any touching or scraping of the bottom at all, making the trawl doors more environmentally friendly.

The present invention covers further embodiments with any combination of features from different embodiments described above. Reference signs in the claims are provided merely as a clarifying example and shall not be construed as limiting the scope of the claims in any way. The present invention also covers the exact terms, features, values and ranges etc. in case these terms, features, values and ranges etc. are used in conjunction with terms such as about, around, generally, substantially, essentially, at least etc. (i.e., "about 3" shall also cover exactly 3 or "substantial constant" shall also cover exactly constant). The terms "a", "an", "first", "second" etc do not preclude a plurality.

## Claims

1. A trawl door having a hollow cross-section and one or more chambers, said hollow trawl door comprising:
- a first side panel (1) having a curvature forming the back surface,
- a second side panel (2) having a curvature forming the front surface,
- an upper panel (3) forming the top of the trawl door and a bottom panel (4) forming the bottom of the trawl door and
- removeable weights (7),
wherein the first side panel and second side panel are connected at a leading edge and at a trailing edge of the trawl door and wherein the trawl door has one or more openings (5) at or near the top and the bottom of the trawl door to allow water to flow in and out of the chamber,
said trawl door being **characterized in that** the trawl door has one or more openings (6) in one or more of the panels of the trawl door to insert said weights (7) into said one or more chambers between the panels of the trawl door.

2. The trawl door according to claim 1, wherein the one or more openings in one or more of the panels of the trawl door is at or near the middle of the trawl door or near its top.

3. The trawl door according to claim 1, wherein the one or more opening has a lid (8).

4. The trawl door according to claim 1, wherein the trawl door has one or more vertical shafts or pipes (9) in the chamber of the door extending from the one or more openings towards the bottom of the trawl door or to the bottom of one of the chambers within the door to lower down the weights.

5. The trawl door according to claim 1, wherein each weight is attached to one or more of a wire, a string or a chain (10) to lower the weights down and to lift them up.

6. The trawl door according to claim 5, wherein the upper end of the wire, the string or the chain has fastening means (11) to attach the inside of the chamber or the inside of the lid or near the lid.

7. The trawl door according to claim 1, wherein the trawl door has a V-shape, U-shaped, dihedral, tip dihedral or polyhedral shape.

8. The trawl door according to any of the preceding claims, wherein the trawl door further comprises a keel (12), said keel comprising plates or bands in the same shape as the cross-section of the hollow trawl door.

9. The trawl door according to claim 1, wherein the trawl door further comprises a trawl door shoe (13), said trawl door shoe comprising plates or bands in the same shape as the cross-section of the hollow trawl door.

10. The trawl door according to claim 1, wherein the front surface further comprises one or more front-strap ears (14) near the trailing edge.

11. The trawl door according to claim 1, wherein the back surface further comprises one or more back-strap ears (15) near the trailing edge.

12. The trawl door according to claim 1, wherein the trawl door further comprises one or more spoilers (16).

13. The trawl door according to claim 1, wherein the trawl door further comprises a location sensor.

14. The trawl door according to claim 1, wherein the trawl door further comprises a bracket (17) at the front side panel and optionally a bracket stopper (18).

15. The trawl door according to claim 1, wherein the trawl door further comprises an airfoil cross-section having:
- a reinforcing pipe (19) along the leading edge of the airfoil, and
- a reinforcing bar (20) along the trailing edge of the airfoil, and
- profiles (24) extending through each of the one or more chambers from the upper panel to the lower panel to increase the strength of the hollow trawl door.

## Patentansprüche

1. Scherbrett mit einem hohlen Querschnitt und einer oder mehreren Kammern, wobei das hohle Scherbrett Folgendes umfasst:
- eine erste Seitenplatte (1) mit einer Krümmung, die die Rückfläche bildet,
- eine zweite Seitenplatte (2) mit einer Krümmung, die die Vorderfläche bildet,
- eine obere Platte (3), die die Oberseite des Scherbretts bildet, und eine untere Platte (4), die den Boden des Scherbretts bildet, und
- entfernbare Gewichte (7),
wobei die erste Seitenplatte und die zweite Seitenplatte an einer Vorderkante und einer Hinterkante des Scherbretts gebunden sind, und wobei das Scherbrett ein oder mehrere Öffnungen (5) auf oder in der Nähe von der Oberseite und dem Boden des Scherbretts aufweist, um das Fließen von Wasser in die und aus der Kammer zu gestatten, wobei das Scherbrett **dadurch gekennzeichnet ist, dass** das Scherbrett eine oder mehrere Öffnungen (6) in einer oder mehreren der Platten des Scherbretts zum Einführen der Gewichte (7) in die eine oder die mehreren Kammern zwischen den Platten des Scherbretts aufweist.

2. Scherbrett nach Anspruch 1, wobei die eine oder die mehreren Öffnungen in einer oder mehreren der Platten des Scherbretts in der Mitte des Scherbretts oder in der Nähe davon oder in der Nähe seiner Oberseite sind.

3. Scherbrett nach Anspruch 1, wobei die eine oder die mehreren Öffnungen einen Deckel (8) aufweisen.

4. Scherbrett nach Anspruch 1, wobei das Scherbrett einen oder mehrere vertikale Schächte oder Rohre (9) in der Kammer des Bretts aufweisen, die sich von der einen oder den mehreren Öffnungen zum Boden des Scherbretts oder zum Boden einer der Kammern in dem Brett zum Absenken der Gewichte erstrecken.

5. Scherbrett nach Anspruch 1, wobei jedes Gewicht an einem Kabel und/oder einem Strick und/oder einer Kette (10) zum Absenken und Anheben der Gewichte angebracht ist.

6. Scherbrett nach Anspruch 5, wobei das obere Ende des Kabels, des Stricks oder der Kette ein Befestigungsmittel (11) zur Anbringung an dem Inneren der Kammer oder dem Inneren des Deckels oder in der Nähe des Deckels aufweist.

7. Scherbrett nach Anspruch 1, wobei das Scherbrett eine V-Form, eine U-Form, eine Dieder-, eine Spitzendieder- oder eine Polyederform aufweist.

8. Scherbrett nach einem der vorhergehenden Ansprüche, wobei das Scherbrett ferner einen Kiel (12) umfasst, wobei der Kiel Tafeln oder Bänder in derselben Form wie der Querschnitt des hohlen Scherbretts umfasst.

9. Scherbrett nach Anspruch 1, wobei das Scherbrett ferner einen Scherbrettschuh (13) umfasst, wobei der Scherbrettschuh Tafeln oder Bänder in derselben Form wie der Querschnitt des hohlen Scherbretts umfasst.

10. Scherbrett nach Anspruch 1, wobei die Vorderfläche ferner eine oder mehrere Vorderriemenösen (14) in der Nähe der Hinterkante umfasst.

11. Scherbrett nach Anspruch 1, wobei die Rückfläche ferner eine oder mehrere Hinterriemenösen (15) in der Nähe der Hinterkante umfasst.

12. Scherbrett nach Anspruch 1, wobei das Scherbrett ferner einen oder mehrere Spoiler (16) umfasst.

13. Scherbrett nach Anspruch 1, wobei das Scherbrett ferner einen Positionssensor umfasst.

14. Scherbrett nach Anspruch 1, wobei das Scherbrett ferner eine Halterung (17) an der vorderen Seitenplatte und optional einen Halterungsanschlag (18) umfasst.

15. Scherbrett nach Anspruch 1, wobei das Scherbrett ferner einen Strömungskörperquerschnitt umfasst, aufweisend:
- ein Verstärkungsrohr (19) entlang der Vorderkante des Strömungskörpers und
- eine Verstärkungsstange (20) entlang der Hinterkante des Strömungskörpers, und
- Profile (24), die sich dahingehend durch jede der einen oder der mehreren Kammern von der oberen Platte zu der unteren Platte erstrecken, die Festigkeit des hohlen Scherbretts zu erhöhen.

## Revendications

1. Porte de chalut ayant une section transversale creuse et une ou plusieurs chambres, ladite porte de chalut creuse comprenant :
- un premier panneau latéral (1) ayant une courbure formant la surface arrière,
- un deuxième panneau latéral (2) ayant une courbure formant la surface avant,
- un panneau supérieur (3) formant la partie supérieure de la porte de chalut et un panneau inférieur (4) formant la partie inférieure de la porte de chalut et
- des poids amovibles (7),
le premier panneau latéral et le deuxième panneau latéral étant connectés au niveau d'un bord d'attaque et au niveau d'un bord de fuite de la porte de chalut et la porte de chalut ayant une ou plusieurs ouvertures (5) au niveau de ou à proximité de la partie supérieure et de la partie inférieure de la porte de chalut afin de permettre à l'eau de s'écouler dans et hors de la chambre, ladite porte de chalut étant **caractérisée en ce que**
la porte de chalut présente une ou plusieurs ouvertures (6) dans un ou plusieurs des panneaux de la porte de chalut pour insérer lesdits poids (7) dans lesdites une ou plusieurs chambres entre les panneaux de la porte de chalut.

2. Porte de chalut selon la revendication 1, dans laquelle la ou les ouvertures dans un ou plusieurs des panneaux de la porte de chalut sont situées au milieu ou à proximité du milieu de la porte de chalut ou à proximité de sa partie supérieure.

3. Porte de chalut selon la revendication 1, dans laquelle la ou les ouvertures présentent un couvercle (8).

4. Porte de chalut selon la revendication 1, la porte de chalut ayant un ou plusieurs arbres verticaux ou tubes verticaux (9) dans la chambre de la porte, s'étendant depuis la ou les ouvertures vers la partie inférieure de la porte de chalut ou vers la partie inférieure de l'une des chambres à l'intérieur de la porte pour abaisser les poids.

5. Porte de chalut selon la revendication 1, dans laquelle chaque poids est attaché à un ou plusieurs parmi un câble, une corde ou une chaîne (10) pour abaisser les poids et les relever.

6. Porte de chalut selon la revendication 5, dans laquelle l'extrémité supérieure du câble, de la corde ou de la chaîne présente des moyens d'attaches (11) pour l'attacher à l'intérieur de la chambre où à l'intérieur du couvercle ou à proximité du couvercle.

7. Porte de chalut selon la revendication 1, la porte de chalut présentant une forme en V, une forme en U, une forme en dièdre, une forme en dièdre de pointe ou une forme polyédrique.

8. Porte de chalut selon l'une quelconque des revendications précédentes, la porte de chalut comprenant en outre une quille (12), ladite quille comprenant des plaques ou des bandes de forme identique à la section transversale de la porte de chalut creuse.

9. Porte de chalut selon la revendication 1, la porte de chalut comprenant en outre un sabot de porte de chalut (13), ledit sabot de porte de chalut comprenant des plaques ou des bandes de forme identique à la section transversale de la porte de chalut creuse.

10. Porte de chalut selon la revendication 1, dans laquelle la surface avant comprend en outre une ou plusieurs oreilles d'attache avant (14) à proximité du bord de fuite.

11. Porte de chalut selon la revendication 1, dans laquelle la surface arrière comprend en outre une ou plusieurs oreilles d'attache arrière (15) à proximité du bord de fuite.

12. Porte de chalut selon la revendication 1, la porte de chalut comprenant en outre un ou plusieurs déflecteurs (16).

13. Porte de chalut selon la revendication 1, la porte de chalut comprenant en outre un capteur de position.

14. Porte de chalut selon la revendication 1, la porte de chalut comprenant en outre une console (17) au niveau du panneau latéral avant et facultativement une butée de console (18).

15. Porte de chalut selon la revendication 1, la porte de chalut comprenant en outre une section transversale de profil aérodynamique ayant :
- un tuyau de renforcement (19) le long du bord d'attaque du profil aérodynamique, et
- une barre de renforcement (20) le long du bord de fuite du profil aérodynamique et
- des profilés (24) s'étendant à travers chacune parmi la ou les chambres depuis le panneau supérieur jusqu'au panneau inférieur pour augmenter la solidité de la porte de chalut creuse.
